# EUROPEAN PATENT APPLICATION

(11) **EP 1 241 599 A1**
(43) Date of publication of application: **18.09.2002**
(21) Application number: 01106090.2
(22) Date of filing: 13.03.2001
(51) Int. Cl.: G06F 17/60

(54) **An apparatus for monitoring a plurality of real-time insurance contracts**

(71) Applicant: NetFormFive Informationstechnologie GmbH, 68165 Mannheim (DE)
(72) Inventor: Ebrahim, Peter Agha, 68165 Mannheim (DE)

(57) **Abstract**

The present invention provides an apparatus for monitoring a real-time insurance contract whereby said real-time insurance contract has at least two active statuses. The apparatus comprises
- a data processing member
- a data storage member
- an information receiving member for receiving information relating to a change of risk covered by said insurance contract
- an insurance contract status assessment member capable of reassessing the status of said insurance contracts based on information comprising information received by said information receiving member and information stored in said data storage member.

## Description

### Field of the invention

The present invention relates to apparatus for monitoring insurance contracts.

### Background

Insurance contracts have become an integral part of daily lives and are one of the basic foundations of our social security system. They allow individual risks such as the risk of a car accident to be carried collectively by the group insurance holders. The financial loss in case of e.g. a car damage can therefore be paid by regular small monthly payments instead of one large sum at the time of damage.

Conventional insurance contracts generally have two statuses, they are either on or off. In other words, it is the underlying assumption of such a contract that the transferred risk is an averaged risk . Accordingly, the respective insurance fee also has to be an averaged insurance fee.

In real life, the situation is of course much more complex. The risk, when for example driving a car, is constantly changing. The weather can be either good or bad. Driving in a crowded city is much riskier than driving on a highway in rural countryside. When the car is parked, the risk drops to almost zero.

Hence, there is a desire to provide insurance contracts that dynamically adjust to the risk that currently needs to be covered, to provide a so-called real-time insurance contract. Such insurance contracts inherently have the advantage that the insurance fees are adjusted simultaneously so that the insurance holders only have to cover the insurance fees for the actually transferred risks. The insurance agreements could also be tailored much more to the holders' needs.

From a logistics point of view, real-time insurance contracts are much more difficult to administrate and to monitor. Not only all the changes of the status have to be recorded, it is also desirable that the insurance holder receives almost immediate notice a change in the transferred risk and the associated fee rate.

Currently, standard computer based apparatuses are used to administrate and monitor insurance contracts. These apparatuses are only capable of handling conventional two status insurance contracts. They can only store the information entered by the insurance administrator and are limited to storing the day of change of off to on and from on to off.

It is therefore an object of the present invention to provide an apparatus for monitoring real-time insurance contracts which overcomes the disadvantages of the prior apparatuses for monitoring insurance contracts.

### Summary of the invention

The present invention provides an apparatus for monitoring a real-time insurance contract whereby said real-time insurance contract has at least two active statuses. The apparatus comprises
- a data processing member
- a data storage member for storing
   - insurance contract data, said insurance contract data comprising insurance contract status data for each of the statuses of said insurance contract
   - the currently transferred risk covered by said insurance contract,
   - the current insurance fee rate due in respect of said insurance contract
   - the times of the change of the status of said insurance contract
   - the amount of fees due in respect of said insurance contract
- an information receiving member for receiving information relating to a change of risk covered by said insurance contract
- an insurance contract status assessment member capable of reassessing the status of said insurance contracts based on information comprising information received by said information receiving member and information stored in said data storage member

### Detailed Description

The present invention provides an apparatus for monitoring real-time insurance contract.

The term "insurance contract" as used herein encompasses all agreements between two parties whereby the first party is taking over a risk encountered by the second party and whereby the second party is paying an insurance fee in consideration of the transfer of risk to the first party. In most cases, an object causes the risk covered by the insurance contract. The object can be material (for example a car) or can be immaterial (for example health of a human being).

The term "status" of an insurance contract as used herein refers to each set of transferred risk and associated insurance fee rate. The two simplest statuses of an insurance contract are active and passive whereby active means a risk is transferred and the respective insurance fee is due and whereby passive means no risk in transferred and only nominal or administrative fees are due if any.

The term "real-time insurance contract" as used herein refers to insurance contracts having at least two active statuses. These active statuses differ in the risk transferred and generally also in the associated insurance fee rate.

The apparatus for monitoring real-time insurance contracts of the present invention is typically based on a computer system such as those well known in the art. This computer system provides the data processing member and the data storage member of the apparatus of the present invention. The data storage member can be a temporary storage means such as a memory chip of the computer, but preferably is a permanent storage means such as a CD-ROM, and yet more preferably is a re-writeable storage means such as a hard drive, a floppy drive, a re-writeable CD-ROM, an optical storage means, a magneto-optical storage means, and the like. The computer system of the apparatus of the present invention further provides data input such as a keyboard, a voice recognition system, a scanner, and the like. It further provides data output means such as displays, printers, and the like. Finally, the functionality of the computer system may be relied on for the functionality of the other members of the apparatus of the present invention such as the information receiving system, insurance contract status assessment member.

The apparatus of the present invention and in particular the computer system is capable of storing data necessary to administrate and monitor an insurance contract and preferably a plurality of insurance contracts. These data for example comprise insurance contract data such as contract status data for each of the statuses of the insurance contract, the currently transferred risk covered by the insurance contract, the current insurance fee rate due, the times of the change of the status of the insurance contract, the sum of fees due in respect of said insurance contract, personal information about the insurance holder, and the like.

The apparatus of the present invention further comprises an information receiving member for receiving information relating to a change of risk covered by said insurance contract. The information can be received from the insurance administrator, from the insurance holder, or from one or more external information gathering devices or any combination thereof.

Where the information is received from the insurance administrator or the insurance holder, the information receiving member may be designed so that the transfer of information to the apparatus of the present invention is triggered by the insurance administrator or by the insurance holder respectively. Such an apparatus offers the possibility for the insurance holder to instantaneously change the status of the insurance contract.

Where information is received from an external information gathering device, this device may gather environmental information relating to the object of the insurance contract such as time of the day, time of the year, weather information, street conditions, and the like. This device may also measure internal information relating to the object of the insurance contract such as the current mode of usage, the position of object, speed and acceleration of the object, and the like. The device may measure any combination of environmental information data and internal information data. Such an apparatus offers the possibility to adjust the status of the insurance contract in dependence of additional, current information about the object of the insurance contract. Sensors for detecting such data are well known in the art and generally are considered suitable for the present invention. The apparatus of the present invention may be designed such that the apparatus requests gathering of information for example on a regular time basis, such that the external information gathering device independently initiates the transfer of information for example triggered by a change of condition picked up by the sensor, or such that the external device independently gathers information (e.g. continuously or in regular time intervals), stores it, and later transmits the information to the information receiving means of the apparatus of the present invention.

In most cases, namely when the source of information is not co-located with the information receiving member, the information receiving member would be connected to the insurance administrator, to the insurance holder, or to the external information gathering device respectively by an information transfer system such as those well known in the art. Preferably, the information transfer system is capable of quickly transmitting information yet more preferably substantially immediately transmitting information. Suitable information transfer systems include but are not limited to phones, wireless phones, computer networks such as the Internet, satellite communication systems, and the like. Such an apparatus allows the status of the insurance contract to be adjusted virtually without any restrictions as to the current position of the insurance holder or the object of the insurance respectively.

The information receiving member may rely for its functionality on at least a part of the computer system of the apparatus of the present invention. A set of instructions to be carried out by the data processing member and stored on the data storage member may be the basis to provide the functionality of the information receiving member of the present invention. Alternatively, the information receiving member may be separate from the computer system of the apparatus of the present invention.

The apparatus of the present invention further comprises a insurance contract status assessment member. This member is capable of determining a change in the insurance contract status based on its input, namely the information received by the information receiving member. The member is capable of interpreting the input information received by the information receiving member and in particular so where the information is received from a external information gathering device. As used herein, the term "interpreting" means the received information is put in relation with the various possible statuses of the insurance contract such as by comparing received numerical data with ranges provided by the insurance contract status assessment member. The latter numerical ranges may be part of the insurance contract data stored on the data storage member. The output of the insurance contract status assessment member of the present invention is the current status of the insurance contract after taking into consideration the received information. Preferably, this output is subsequently stored in that data storage member.

The insurance contract status assessment member may rely for its functionality on at least a part of the computer system of the apparatus of the present invention. A set of instructions to be carried out by the data processing member and stored on the data storage member may be the basis to provide the functionality of the insurance contract status assessment member of the present invention. Alternatively, the insurance contract status assessment member may be separate from the computer system of the apparatus of the present invention.

The apparatus of the present invention may further comprise an insurance parameter determination member capable of determining insurance parameters for the insurance contract. Preferably, the insurance parameters determined by the insurance parameter determination member include the insurance rate. The output of the insurance parameter determination member is the current set of insurance parameters after consideration of the status input. Preferably, this output is subsequently stored in that data storage member. The determination process may be based on an arithmetic formula whereby the status of the insurance contract (the output parameter of the insurance contract status assessment member) is an input parameter of said arithmetic formula. The most simple suitable formula is based on a predefined array of sets of insurance parameters where the array is indexed by the possible statuses of the insurance contracts. In particular where the status of the insurance contract is defined by a numerical parameter, more complex, arithmetic formulas based on this numeric status parameter are also suitable.

Optionally, the determination process may have further input parameters such as external information (e.g. time of the day, time of the year, weather conditions, and the like), holder related information (e.g. insurance history of the holder, behavior pattern of the holder, health information of the holder, and the like), and the like.

The insurance parameter determination member may rely for its functionality on at least a part of the computer system of the apparatus of the present invention. A set of instructions to be carried out by the data processing member and stored on the data storage member may be the basis to provide the functionality of the insurance parameter determination member of the present invention. Alternatively, the insurance parameter determination member may be separate from the computer system of the apparatus of the present invention or may involve interaction with the insurance administrator.

The apparatus of the present invention may further comprise an information transmission member capable of transmitting information to either party of said insurance contract. Such information may for example comprise the fact of a change of status, the new status, the new fee rate, any combination thereof, and the like. If the information receiving party is not co-located with the apparatus of the present invention, the information may be transmitted via a suitable information transfer system. Suitable information transfer systems include but are not limited to phones, wireless phones, computer networks such as the Internet, satellite communication systems, and the like.

The information transmission member may rely for its functionality on at least a part of the computer system of the apparatus of the present invention. A set of instructions to be carried out by the data processing member and stored on the data storage member may be the basis to provide the functionality of the information transmission member of the present invention. Alternatively, the information transmission member may be separate from the computer system of the apparatus of the present invention.

## Claims

1. An apparatus for monitoring a real-time insurance contract said real-time insurance contract having at least two active statuses, said apparatus comprising
- a data processing member
- a data storage member for storing
- insurance contract data, said insurance contract data comprising insurance contract status data for each of the statuses of said insurance contract
- the currently transferred risk covered by said insurance contract,
- the current insurance fee rate due in respect of said insurance contract
- the times of the change of the status of said insurance contract
- the amount of fees due in respect of said insurance contract
- an information receiving member for receiving information relating to a change of risk covered by said insurance contract
- an insurance contract status assessment member capable of reassessing the status of said insurance contracts based on information comprising information received by said information receiving member and information stored in said data storage member

2. An apparatus for monitoring a real-time insurance contract according to Claim 1
wherein
said apparatus further comprises an insurance parameter determination member capable of determining insurance parameters for said insurance contract based on an arithmetic formula, said status of said insurance contract being an input parameter of said arithmetic formula.

3. An apparatus for monitoring a real-time insurance contract according to Claim 2
whereby
said insurance parameters determined by said insurance parameter determination member comprise the current fee rate.

4. An apparatus for monitoring a real-time insurance according to Claim 2 whereby
said arithmetic formula has a second input parameter, said second input parameter being independent of the object causing the risk covered by said insurance contract.

5. An apparatus for monitoring a real-time insurance contract according to Claim 4
wherein
said second parameter is selected from the group of
- time of the day
- time of the year
- weather conditions

6. An apparatus for monitoring a real-time insurance contract according to Claim 1
whereby
a change of risk covered by said insurance contract is triggered by the user of said object into the said information receiving member.

7. An apparatus for monitoring a real-time insurance contract according to Claim 1,
an object causing the risk covered by said insurance contract
wherein
said information receiving member receives information from an external data gathering device capable of detecting a change of the internal or environmental condition of said object.

8. An apparatus for monitoring a real-time insurance contract according to Claim 7
wherein
said change of the physical condition is selected from the group of
- change mode of usage
- change of position
- change of speed
- change of environmental conditions

9. An apparatus for monitoring a real-time insurance contract according to Claim 7
wherein
said information receiving member is capable of automatically detecting a change of the physical condition of said object.

10. An apparatus for monitoring a real-time insurance contract according to Claim 1
wherein
the information used by said insurance contract status assessment member further comprises an array of insurance parameters comprising a fee rate, said array being indexed by parameters comprising the possible statuses of said insurance contract.

11. An apparatus for monitoring a real-time insurance contract according to Claim 1
wherein
said apparatus further comprises an information transmission member capable of transmitting information to either party of said insurance contract.
